# EUROPEAN PATENT SPECIFICATION

(11) **EP 2 546 559 B1**
(45) Date of publication and mention of the grant of the patent: **03.05.2017**
(21) Application number: 11752800.0
(22) Date of filing: 14.03.2011
(51) Int. Cl.: F16K 15/06, F16K 27/10, F16K 27/12

(54) **SHUTTLE-TYPED HIGH-TEMPERATURE AND HIGH-PRESSURE WELDABLE CHECK VALVE**
HIN- UND HERBEWEGLICHES SCHWEISSBARES RÜCKSCHLAGVENTIL FÜR HOHE TEMPERATUR UND HOHEN DRUCK
SOUPAPE-NAVETTE DE NON-RETOUR SOUDABLE À HAUTE TEMPÉRATURE ET À HAUTE PRESSION

(30) Priority: 12.03.2010 CN 201010123357
(43) Date of publication of application: 16.01.2013
(73) Proprietor: ZENG, XIANGWEI, Chengdu Sichuan 610041 (CN)
(72) Inventor: ZENG, XIANGWEI, Chengdu Sichuan 610041 (CN)
(74) Representative: Heine, Christian Klaus
(86) International application number: PCT/CN2011/000403
(87) International publication number: WO 2011/110057

(56) References cited:
- CN-A- 101 220 876
- CN-A- 101 220 876
- CN-A- 101 220 878
- CN-A- 101 220 878
- CN-A- 101 776 168
- CN-A- 101 776 168
- CN-U- 201 687 996
- CN-U- 201 687 996
- US-A- 3 106 220
- US-A- 3 106 220
- US-A- 3 995 658
- US-A- 3 995 658
- US-A- 4 281 680
- US-A- 4 281 680
- US-A- 4 930 539
- US-A- 4 930 539
- US-A- 5 374 028
- US-A- 5 374 028

## Description

### Technical Field

The present invention relates to a check valve on the high-temperature and high-pressure medium passageway, and in particular to a welded type check valve.

### Background Art

The existing welded type check valves are swing check valves; closing and opening of the valve flap is a movement centering the lug and cutting the main flow channel. The manhole cannot be separated from the main flow channel, thereby resulting in a stagnation zone, swirl, block of filth and concentration of temperature stress, and therefore increase in flow resistance and energy consumption; the lug is displaced due to abrasion and the valve flap strikes the valve seat to cause vibration; leakage of special mediums such as high-temperature and high-pressure fluids will results in safety accident. Thus, the check valve cannot be mounted at any angle and can only be applied to limited environment.

CN 101 776 168 A discloses a shuttle-type high-temperature and high-pressure welding check valve which solves the problems that the welded check valve cannot be installed at any angle and leakage happens easily. In the shuttle-type high-temperature and high-pressure welding check valve, a middle cavity of a valve body is connected with a coupling at two axial ends, and an outer wall of a port of the coupling is provided with a welding groove. The two axial ends of the middle cavity and a connecting passage of the coupling are fixedly connected with a valve bush and a front bearing respectively. A valve flap is in rigid connection with a front shaft and a back shaft which are coaxial. The front shaft is in movable fit with an axial central hole of the front bearing, the back shaft is in movable fit with an axial central hole of the valve bush and the back shaft is sleeved with a spring.

Furthermore, US 3 106 220 A discloses a check valve comprising a body. The body is provided with a cover received within an opening in the top of the body. The cover is sealed by an annual seal pressed against the body and covered by an annular ring which is engaged between the seal and an annular key within an annular recess in the valve body. The cover is connected to a locking plate by studs so as to be maintained in sealing engagement with the seal.

Moreover, CN 201 687 996 U discloses a shuttle-type high-temperature high-pressure welding check valve. A middle cavity of a valve body of the shuttle-type high-temperature high-pressure welding check valve is connected with joints at two axial ends of the valve body. Welding bevel openings are arranged on the outer walls of the ends of the joints. A valve bush and a front support are respectively and fixedly connected with the two axial ends of the middle cavity and connecting channels of the joints. A valve clack is rigidly connected with a front shaft and a rear shaft which are coaxial. The front shaft movably matches with an axial central hole of the front support. The rear shaft movably matches with an axial central hole of the valve bush.

### Summary of the Invention

The objective of the present invention is to provide a shuttle-typed high temperature and high-pressure welded type check valve which can be conveniently assembled or disassembled, whose components precisely and firmly are positioned therein, and which has the advantages of small flow resistance, incapability of filth accumulation and being mountable at any angle.

The present invention is carried out in such a manner:
A shuttle-typed high-temperature and high-pressure welded type check valve of the present invention is provided, wherein a valve seat 6 and a valve sleeve 2 are provided in a valve chamber between two axial ports of a valve body 1; the rear end of the valve sleeve 2 is connected with a circular ring 16 by a support 20; the circular ring 16 is in movable engagement or in thread connection with an inner circle of a flow channel of the valve body port; the front end surface of the valve sleeve 2 is provided with an annular groove; the valve sleeve 2 has a center hole which is in movable engagement with a valve shaft 5 of a valve flap 3; in the annular groove a spring 4 is nested on the valve sleeve and the valve shaft and connected with the valve flap; the valve body is provided with a manhole 10, whose axis is perpendicular to the axial direction of the valve body; a step provided in the manhole is connected with an upper cover 11, whose the lower end surface is aligned with the flow channel in the valve camber to form an axially symmetrical valve chamber; the upper end surface of the manhole is connected with a valve cap 12 by bolts 13; the upper cover is connected with the valve cap by a cushion block or a rib, or a gap is provided between the upper cover and the valve cap; the upper cover is connected with internal threads of the manhole by external threads or is connected with the manhole by movable engagement; the two ports of the valve body are provided with welding bevels 14.

The front end of the circular ring 16 is connected with the front end step of the flow channel and the rear end of the circular ring is connected with an elastic locking ring 9 in a groove of the flow channel. In another embodiment the upper end of a square block or a cylindrical block 7 is connected with the upper cover 11 and the lower end of the block is connected with the valve sleeve 2; a locking nut or pin 8 is passed through the upper cover, the square block or the cylindrical block to connect with the valve sleeve 2. In yet another embodiment one port of the valve chamber is provided with a front support 17 comprising a center hole, said front support 17 being integral with the port or being connected with the port via the threads of a circular ring 15 whose end surface is configured as a valve seat; the center hole of the front support is coaxial with the valve body and the valve flap 3 has a front shaft 19 in movable engagement with the center hole of the front support.

The manhole 10 is circular or square and has an axial length equal to the length from the valve seat 6 to the circular ring 16.

The present invention has a simple structure. The manhole is provided with an upper cover which is completely aligned with the curve face of the main flow channel to separate the chamber of the manhole from the main flow channel, thereby reducing flow resistance and swirl, accumulation of filth and preventing leaking. The check valve can be mounted at any angle with the components therein being precisely positioned, and can be conveniently assembled or disassembled; the valve flap and the valve seat can be removed and combined in a free space such that the check valve is safe and reliable in use.

### Brief Description of the Drawings

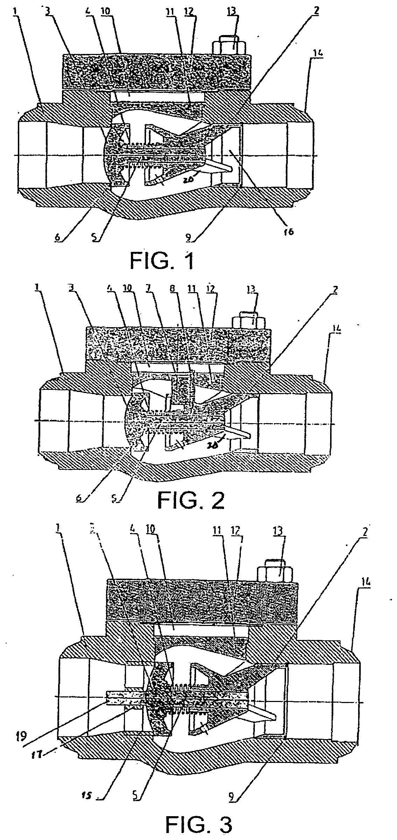

Fig. 1 is a first structural view of the present invention;
Fig. 2 is a second structural view of the present invention;
Fig. 3 is a third structural view of the present invention.

### Description of the Embodiments

### First embodiment:

The two axial ports of the valve body 1 respectively have a circle of welding bevel 14. A valve seat 6 for engaging with a valve flap 3 in a sealing manner is provided at one end of the valve chamber and another end of the valve chamber is provided with a valve sleeve 2 which is connected with a circular ring 16 via a support 20; the front end of the circular ring 16 is positioned by a step on the flow channel and the rear end thereof is connected with an elastic locking ring 15 in the groove of the flow channel. An annular groove 18 is provided at the front end of the valve sleeve 2 and the valve shaft 5 is engaged with the center hole of the valve sleeve 2 and has a spring 4 thereon. A step on the manhole 10 is connected with an upper cover 11 whose underside forms a portion of a symmetrical flow channel of the valve chamber. Axial positioning of the valve sleeve is achieved by the elastic locking ring 15 and a step on the inner hole of the flow channel; the circular ring 16 of the valve sleeve is in movable engagement with the inner circle of the flow channel to achieve radial positioning of the valve sleeve; the valve flap can be removed from the manhole for maintenance and can be conveniently disassembled or assembled. The elastic locking ring has enough section to bear shear of the axial pushing force and is suitable for valves of middle and small caliber.

### Second embodiment:

The circular ring 15 of the front support 17 is in thread engagement with the inner circle of the flow channel of the valve body; the valve seat 6 is located on the circular ring 15 of the front support 17; the valve flap has a front shaft 19 in movable engagement with the center hole of the front support; other structures are the same as in the first embodiment.

The front support 17 can prevent the valve flap from sagging due to weight and has excellent coaxiality, which is beneficial for axial movement of the valve seat and the valve flap during opening or closing. The front support is suitable for valves of middle and large caliber. The valve flap, valve seat and front support can be removed for the purpose of maintenance.

### Third embodiment:

The short edge of a rectangular block 7 is parallel with the axis of the valve body and its long edge is perpendicular to the axis of the valve body, and its lower end is embedded into a rectangular hole of the conical body of the valve sleeve, the hole bottom surface being parallel with the axis of the valve body; the upper end of the block is embedded into a rectangular hole of the upper cover, the hole top surface being parallel with the axis of the valve body. The upper cover, the rectangular block and the conical body of the valve sleeve are coupled by the positioning pin or bolt, thereby exhibiting better integrity and rigidity. The axial positioning of the valve sleeve is achieved by the rectangular block; the circular ring 16 of the valve sleeve is in movable engagement with the inner circle of the flow channel of the valve body to achieve radial positioning. The valve flap and the rectangular block can be removed for maintenance in a free space and are suitable for valves of middle and small caliber.

Other structures are the same as in the first embodiment.

## Claims

1. A shuttle-typed high-temperature and high-pressure welded type check valve, wherein a valve seat (6) and a valve sleeve (2) are provided in a valve chamber between two axial ports of a valve body (1); wherein the two ports of the valve body are provided with welding bevels (14); the rear end of the valve sleeve (2) is connected with a circular ring (16) by a support (20); the circular ring (16) is in movable engagement or in thread connection with an inner circle of a flow channel of the valve body port; the front end surface of the valve sleeve (2) is provided with an annular groove; the valve sleeve (2) has a center hole which is in movable engagement with a valve shaft (5) of a valve flap (3); in the annular groove a spring (4) is nested on the valve sleeve and the valve shaft and connected with the valve flap; the valve body is provided with a manhole (10), whose axis is perpendicular to the axial direction of the valve body; the upper end surface of the manhole is connected with a valve cap (12) by bolts (13); **characterized in that** a step is provided in the manhole, wherein said step is connected with an upper cover (11), whose lower end surface is aligned with the flow channel in the valve camber to form an axially symmetrical valve chamber; the upper cover is connected with the valve cap by a cushion block or a rib, or a gap is provided between the upper cover and the valve cap; the upper cover is connected with internal threads of the manhole by external threads or is connected with the manhole in a movable engagement.

2. The check valve according to claim 1, **characterized in that** the front end of the circular ring (16) is connected with the front end step of the flow channel and the rear end of the circular ring is connected with an elastic locking ring (9) in a groove of the flow channel.

3. The check valve according to claim 1, **characterized in that** the upper end of a square block or a cylindrical block (7) is connected with the upper cover (11) and the lower end of the block is connected with the valve sleeve (2); a locking nut or pin (8) is passed through the upper cover, the square block or cylindrical block to connect with the valve sleeve (2).

4. The check valve according to claim 1, **characterized in that** one port of the valve chamber is provided with a front support (17) comprising a center hole, said front support (17) being integral with the port or being connected with the port via the threads of a circular ring (15) whose end surface is configured as a valve seat; the center hole of the front support is coaxial with the valve body and the valve flap (3) has a front shaft (19) in movable engagement with the center hole of the front support.

5. The check valve according to claim 1, **characterized in that** the manhole (10) is circular or square and has an axial length equal to the length between the valve seat (6) and the circular ring (16).

## Patentansprüche

1. Mit hoher Temperatur und hohem Druck verschweißtes Wechsel-Rückschlagventil, wobei ein Ventilsitz (6) und eine Ventilhülse (2) in einer Ventilkammer zwischen zwei axialen Öffnungen eines Ventilgehäuses (1) vorgesehen sind; wobei die beiden Öffnungen des Ventilgehäuses mit Schweißfasen (14) versehen sind; das rückwärtige Ende der Ventilhülse (2) ist über einen Träger (20) mit einem kreisförmigen Ring (16) verbunden; der kreisförmige Ring (16) steht in beweglichem Eingriff mit einem inneren Kreis eines Strömungskanals der Öffnung des Ventilgehäuses oder ist über ein Gewinde damit verbunden; die vordere Stirnfläche der Ventilhülse (2) ist mit einer ringförmigen Nut versehen; die Ventilhülse (2) weist ein zentrales Loch auf, das in beweglichem Eingriff mit einem Ventilschaft (5) einer Ventilklappe (3) steht; in der ringförmigen Nut ist eine Feder (4) in die Ventilhülse eingesetzt und der Ventilschaft ist mit der Ventilklappe verbunden; das Ventilgehäuse ist mit einem Mannloch (10) versehen, dessen Achse senkrecht zur axialen Richtung des Ventilgehäuses verläuft; die obere Stirnfläche des Mannlochs ist mit Bolzen (13) mit einer Ventilkappe (12) verbunden; **dadurch gekennzeichnet, dass** im Mannloch eine Stufe vorgesehen ist, wobei die besagte Stufe mit einer oberen Abdeckung (11) verbunden ist, deren untere Stirnfläche mit dem Strömungskanal in der Ventilkammer fluchtet, um eine axial symmetrische Ventilkammer zu bilden; die obere Abdeckung ist über einen Dämpferblock oder eine Rippe mit der Ventilkappe verbunden, oder ein Zwischenraum ist zwischen der oberen Abdeckung und der Ventilkappe vorgesehen; die obere Abdeckung ist über ein Außengewinde mit dem Innengewinde des Mannlochs verbunden oder steht in beweglichem Eingriff mit dem Mannloch.

2. Rückschlagventil nach Anspruch 1, **dadurch gekennzeichnet, dass** das vordere Ende des kreisförmigen Ringes (16) mit der vordersten Stufe des Strömungskanals verbunden ist und das rückwärtige Ende des kreisförmigen Ringes mit einem elastischen Sicherungsring (9) in der Nut des Strömungskanals verbunden ist.

3. Rückschlagventil nach Anspruch 1, **dadurch gekennzeichnet, dass** das obere Ende eines quadratischen Blocks oder eines zylindrischen Blocks (7) mit der oberen Abdeckung (11) verbunden ist und das untere Ende des Blocks mit der Ventilhülse (2) verbunden ist; eine Sicherungsmutter oder ein Sicherungsstift (8) wird durch die obere Abdeckung, den quadratischen Block oder den zylindrischen Block hindurchgeführt, um mit der Ventilhülse (2) verbunden zu werden.

4. Rückschlagventil nach Anspruch 1, **dadurch gekennzeichnet, dass** eine Öffnung der Ventilkammer mit einem vorderen Träger (17) versehen ist, der ein zentrales Loch umfasst, wobei der besagte vordere Träger (17) fest mit der Öffnung verbunden ist oder über Gewinde eines kreisförmigen Rings (15) mit der Öffnung verbunden ist, dessen Stirnfläche als Ventilsitz konfiguriert ist; das zentrale Loch des vorderen Trägers liegt koaxial zum Ventilgehäuse und die Ventilklappe (3) weist einen vorderen Schaft (19) auf, der in beweglichem Eingriff mit dem zentralen Loch des vorderen Trägers steht.

5. Rückschlagventil nach Anspruch 1, **dadurch gekennzeichnet, dass** das Mannloch (10) kreisförmig oder quadratisch ist und eine axiale Länge aufweist, die gleich der Länge zwischen dem Ventilsitz (6) und dem kreisförmigen Ring (16) ist.

## Revendications

1. Soupape anti-retour de type soudée à haute température et à haute pression du type navette, dans laquelle un siège de soupape (6) et un manchon de soupape (2) sont prévus dans une chambre de soupape entre deux orifices axiaux d'un corps de soupape (1) ; les deux orifices du corps de soupape étant munis de chanfreins de soudage (14) ; l'extrémité arrière du manchon de soupape (2) étant reliée à une bague circulaire (16) par un support (20) ; la bague circulaire (16) étant en engagement mobile ou en liaison filetée avec un cercle intérieur d'un conduit d'écoulement de l'orifice de corps de soupape ; la surface d'extrémité avant du manchon de soupape (2) étant pourvue d'une rainure annulaire ; le manchon de soupape (2) comportant un trou central qui est en engagement mobile avec une tige de soupape (5) d'un clapet de soupape (3) ; dans la gorge annulaire, un ressort (4) étant emboîté sur le manchon de soupape et la tige de soupape et étant relié au clapet de soupape ; le corps de soupape étant pourvu d'un trou de visite (10) dont l'axe est perpendiculaire à la direction axiale du corps de soupape ; la surface d'extrémité supérieure du trou de visite étant reliée à un capuchon de soupape (12) par des boulons (13) ;
**caractérisée en ce qu'**une marche est prévue dans le trou de visite, ladite marche étant reliée à un couvercle supérieur (11) dont la surface d'extrémité inférieure est alignée avec le conduit d'écoulement de la chambre de soupape pour former une chambre de soupape à symétrie axiale ; le couvercle supérieur est relié au capuchon de soupape par un bloc élastique ou par une nervure, ou un espace étant ménagé entre le couvercle supérieur et le capuchon de soupape ; le couvercle supérieur étant relié à des filetages intérieurs du trou de visite par des filetages extérieurs ou étant relié au trou de visite en engagement mobile.

2. Soupape anti-retour selon la revendication 1, **caractérisée en ce que** l'extrémité avant de la bague circulaire (16) est reliée à la marche d'extrémité avant du conduit d'écoulement et **en ce que** l'extrémité arrière de la bague circulaire est reliée à une bague de blocage élastique (9) dans une gorge du conduit d'écoulement.

3. Soupape anti-retour selon la revendication 1, **caractérisée en ce que** l'extrémité supérieure d'un bloc carré ou d'un bloc cylindrique (7) est reliée au couvercle supérieur (11) et **en ce que** l'extrémité inférieure du bloc est reliée au manchon de soupape (2) ; un écrou ou une broche de blocage (8) passe à travers le couvercle supérieur, le bloc carré ou le bloc cylindrique pour se raccorder au manchon de soupape (2).

4. Soupape anti-retour selon la revendication 1, **caractérisée en ce qu'**un orifice de la chambre de soupape est muni d'un support avant (17) comprenant un trou central, ledit support avant (17) étant solidaire de l'orifice ou étant relié à l'orifice par l'intermédiaire des filetages d'une bague circulaire (15) dont la surface d'extrémité est agencée en siège de soupape ; le trou central du support avant est coaxial au corps de soupape et le clapet de soupape (3) comporte une tige avant (19) en engagement mobile avec le trou central du support avant.

5. Soupape anti-retour selon la revendication 1, **caractérisée en ce que** le trou de visite (10) est circulaire ou carré et a une longueur axiale égale à la longueur entre le siège de soupape (6) et la bague circulaire (16).
